Europäisches Patentamt

European Patent Office

Office européen des brevets

(19)

(11) Publication number: **0 687 984 A1**

# EUROPEAN PATENT APPLICATION

(12)

(21) Application number: **95109360.8**

(22) Date of filing: **16.06.95**

(51) Int. Cl.6: **G06F 13/42**

(30) Priority: **16.06.94 JP 156394/94**

(43) Date of publication of application:
**20.12.95 Bulletin 95/51**

(84) Designated Contracting States:
**DE FR GB NL**

(71) Applicant: **NEC CORPORATION**
**7-1, Shiba 5-chome**
**Minato-ku**
**Tokyo (JP)**

(72) Inventor: **Mio, Yuichiro, c/o NEC Corporation**
**7-1, Shiba 5-chome,**
**Minato-ku**
**Tokyo (JP)**

(74) Representative: **Baronetzky, Klaus, Dipl.-Ing.**
**et al**
**Patentanwälte**
**Dipl.-Ing. R. Splanemann, Dr. B. Reitzner,**
**Dipl.-Ing. K. Baronetzky**
**Tal 13**
**D-80331 München (DE)**

(54) Data processing system having an address/data bus directly coupled to peripheral device

(57) In a data processing system having a bus shared between an address transfer and a data transfer, a bus state controller includes a register for holding information concerning whether or not an idle state is to be inserted into a bus cycle, and an idle state controller controlled by a read/write signal and the information held in the register, for inserting the idle state into the bus cycle when the idle state is to be inserted into the bus cycle. Even if the address/data bus of the CPU is directly coupled to a data input/output of a peripheral device, collision between data and address can be avoided.

FIGURE 4

## Background of the Invention

### Field of the invention

The present invention relates to a data processing system, and more specifically to a data processing system having an address/data bus shared between an address transfer and a data transfer.

### Description of related art

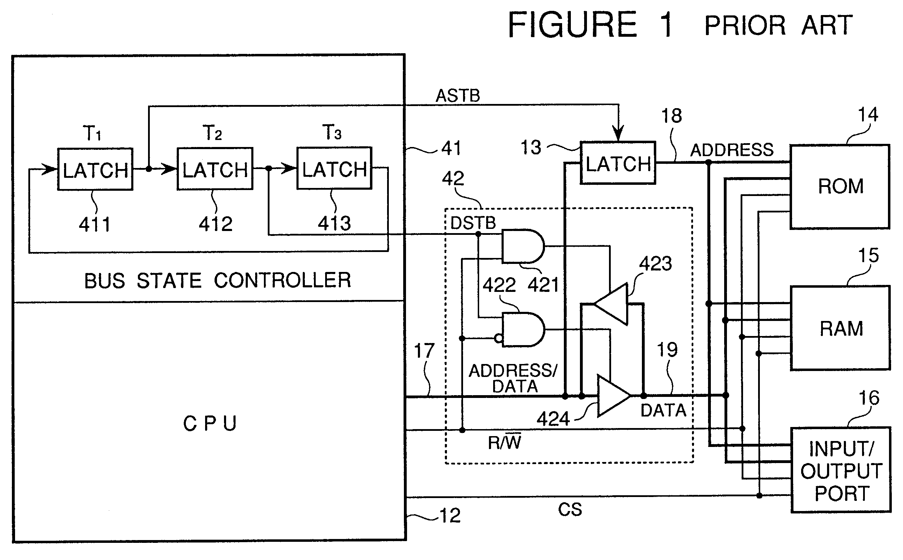

Referring to Figure 1, there is shown a block diagram illustrating a typical example of this type of data processing system. The shown data system includes a CPU (central processing unit) 12, a bus state controller 41, a ROM (read only memory) 14, a RAM (random access memory) 15, an input/output port 16, a latch 13 and a controller 42, which are connected as shown in the drawing. The data processing system is configured to share the same bus between an address transfer and a data transfer. In other words, the same bus is used in a time-shared manner not only as an address bus bus also as a data bus. For this purpose, the data processing system includes an address/data bus 17, through which an address and data are transferred in a multiplexed manner.

The bus state controller 41 comprises first, second and third latches 411, 412 and 413 operated in synchronism with a clock CLOCK internally generated in the CPU 12. As shown in Figure 1, an output of each of the first and second latches 411 and 412 is connected to an input of a succeeding latch, and an output of the third latch 413 is fed back to an input of the first latch 411. These first, second and third latches 411, 412 and 413 corresponds to states $T_1$, $T_2$ and $T_3$ of a bus cycle, respectively. Namely, the output of any one of the three latches 411, 412 and 413 is always at "1", so that when the output of the latch 411 is at "1", the $T_1$ state is defined, and when the output of the latch 412 is at "1", the $T_2$ state is defined, and also when output of the latch 413 is at "1", the $T_3$ state is defined.

As shown in Figure 1, an address strobe signal ASTB, which is a strobe signal for fetching an address signal, is supplied form the latch 411, and a data strobe signal DSTB, which is a strobe signal for a data access, is supplied form the latch 412. The address strobe signal ASTB is supplied to the latch 13, which is connected between the address/data bus 17 and an external address bus 18 connected to the external device such as the ROM 14, the RAM 15 and the input/output port 16.

The controller 42 includes AND gates 421 and 422 and tristate buffers 423 and 424, connected as shown in the drawing. The AND gate 421 receives the data strobe signal DSTB and a read/write signal $R/\overline{W}$ from the CPU 12, and supplies an output signal to a control input of the tristate buffer 423 connected between the address/data bus 17 and an external data bus 19 in a data reading direction. The AND gate 422 receives the data strobe signal DSTB and an inverted signal of the read/write signal $R/\overline{W}$, and supplies an output signal to a control input of the tristate buffer 424 connected between the address/data bus 17 and a data bus 19 in a data writing direction. Here, an upper bar of $\overline{W}$ indicates that a low level is active. Therefore, when the read/write signal $R/\overline{W}$ is at a low level, the write signal is active and the read signal is inactive.

Therefore, when the data strobe signal DSTB is at "1", either the tristate buffer 423 or 424 is activated dependently upon the logical value of the read/write signal $R/\overline{W}$, so that an input/output of the data is controlled.

More specifically, when the data strobe signal DSTB is at "1" and the read/write signal $R/\overline{W}$ is at "1" (namely, the read signal is active), the output of the AND gate 421 is brought to "1", and the output of the AND gate 422 is brought to "0", so that the tristate buffer 423 having the control input connected to the output of the AND gate 421 is activated, and the tristate buffer 424 having the control input connected to the output of the AND gate 422 is deactivated. As a result, data outputted from an external device accessed, for example, the ROM 14, is transferred through the external data bus 19, the tristate buffer 423 and the address/data bus 17 to the CPU 12.

When the data strobe signal DSTB is at "1" and the read/write signal $R/\overline{W}$ is at "0" (namely, the write signal is active), the output of the AND gate 421 is brought to "0", and the output of the AND gate 422 is brought to "1", so that the tristate buffer 423 is deactivated, and the tristate buffer 424 is activated. As a result, data outputted from the CPU 12 is transferred through the address/data bus 17, the tristate buffer 424 and the external data bus 19 and is written into an external device accessed, for example, the RAM 15.

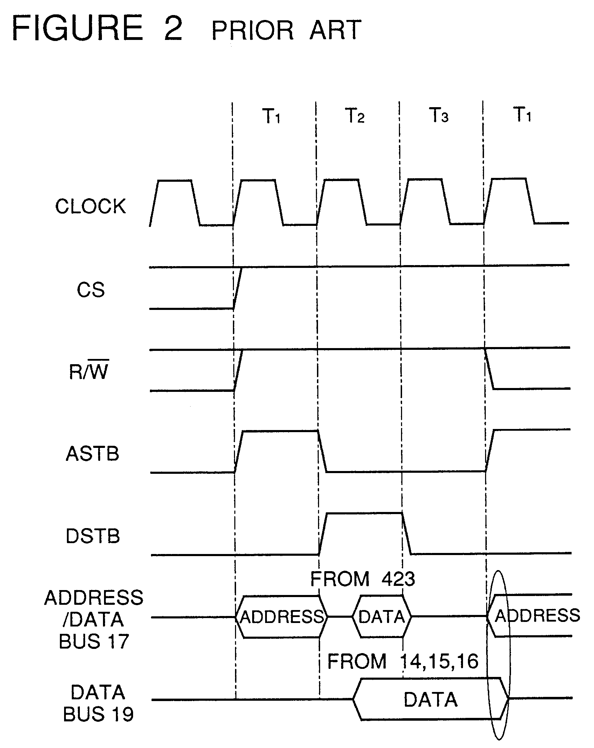

Now, operation for reading data from the ROM 14, the RAM 15 and the input/output port 16 will be described with reference to Figure 2, which is a timing chart illustrating a reading operation of the data processing system shown in Figure 1.

When data is read, a chip select signal CS outputted from the CPU 12 for selecting the ROM 14, the RAM 15 and the input/output port 16 and the read/write signal $R/\overline{W}$ are brought to "1".

In the $T_1$ state, the address signal outputted from the CPU 12 to the address/data bus 17, is latched in the latch 13 in response to the address strobe signal ASTB indicating the outputting of the address, and then, is supplied to the ROM 14, the RAM 15 and the input/output port 16.

In the $T_2$ state, the data strobe signal DSTB is brought to "1", the tristate buffer 423 is activated as mentioned above, so that data outputted from one designated by the address signal, of the ROM 14, the RAM 15 and the input/output port 16, is supplied to the CPU 12.

In the $T_3$ state, the data strobe signal DSTB is brought to "0", and therefore, the tristate buffer 423 is deactivated, so that the address/data bus 17 are put in a high impedance condition.

In the $T_1$ state of a next bus cycle, even if the data continues to be supplied from the designated one of the ROM 14, the RAM 15 and the input/output port 16, since the tristate buffer 423 is in a deactivated condition, the data never collides with an address supplied from the CPU 12 on the address/data bus 17.

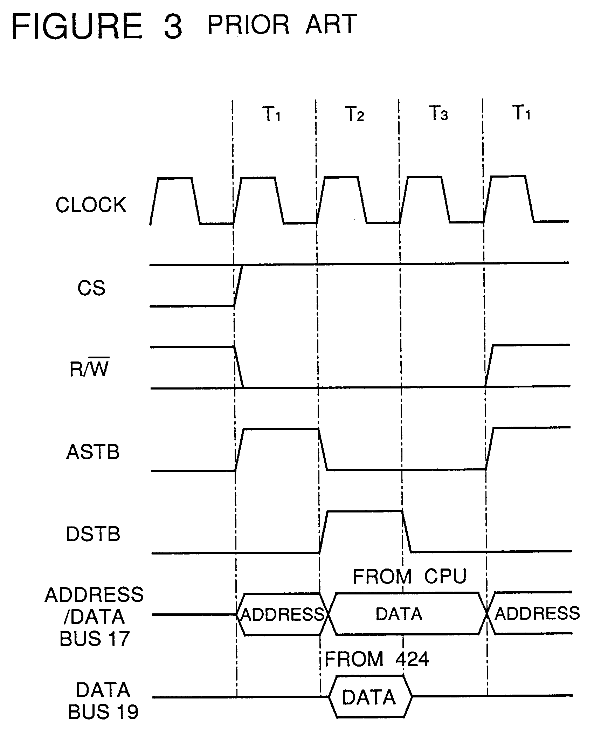

Next, operation for writing data to the RAM 15 and the input/output port 16 will be described with reference to Figure 3, which is a timing chart illustrating a writing operation of the data processing system shown in Figure 1.

When data is written, the chip select signal $\overline{CS}$ is brought to "1" and the read/write signal $R/\overline{W}$ is brought to "0".

In the $T_1$ state, the address signal outputted from the CPU 12 to the address/data bus 17, is latched in the latch 13 in response to the address strobe signal ASTB, and then, is supplied to the RAM 15 and the input/output port 16.

In the $T_2$ state, the data strobe signal DSTB is brought to "1", the tristate buffer 424 is activated, so that data outputted from the CPU 12 is supplied through the address/data bus 17 and the tristate buffer 424 to the data bus 19.

In the $T_3$ state, the data strobe signal DSTB is brought to "0", and therefore, the tristate buffer 424 is deactivated.

As mentioned above, the conventional data processing system configured to an address/data bus shared between an address transfer and a data transfer has been so constructed that the address outputted from the CPU 12 and the input/output data are time-shared into different states by use of the controller 42. With this arrangement, when the CPU reads the data, even if the data outputted from a peripheral device such as the RAM is delayed from the $T_3$ state, the data can be prevented from colliding with the address outputted from the CPU 12 in the next $T_1$ state.

However, since the controller 42 are required to be located between the CPU 12 and the peripheral device, the access time inevitably drops, the assembling area on a board inevitably becomes large.

Summary of the Invention

Accordingly, it is an object of the present invention to provide a data processing system which has overcome the above mentioned defect of the conventional one.

Another object of the present invention is to provide a data processing system capable of avoiding collision between data and address even if the address/data bus of the CPU is directly coupled to a data input/output of a peripheral device without intermediary of a controller.

The above and other objects of the present invention are achieved in accordance with the present invention by a data processing system having a bus shared between an address transfer and a data transfer, comprising a control means for controlling insertion of an idle state into a bus cycle, and a memory means for storing information concerning whether or not the idle state is to be inserted, the control means operating to insert the idle state into a bus cycle on the basis of the information of the memory means.

According to another aspect of the present invention, there is provided a data processing system having a bus shared between an address transfer and a data transfer, comprising a control means for controlling insertion of an idle state into a bus cycle, a memory means for storing information concerning whether or not the idle state is to be inserted, and a selection means for selecting and outputting information for an address region to be accessed, from the information of the memory means concerning whether or not the idle state is to be inserted, the control means operating to insert the idle state into a bus cycle on the basis of the selected address region information.

In a preferred embodiment, the data processing system in accordance with the present invention having a bus shared between an address transfer and a data transfer, and so configured that a bus cycle is composed of a plurality of states, comprises a bus state control means for controlling respective states of each bus cycle. This bus state control means includes a latch means for holding a signal for controlling the transition of the states in the bus cycle, an idle state controller for controlling insertion of an idle state into a bus cycle, and a memory means for storing information concerning whether or not the idle state is to be inserted. The control means operates to insert the idle state into a bus cycle on the basis of the information stored in the memory means.

More preferably, the memory means includes a plurality of memory cells each storing information concerning whether or not the idle state is to be inserted, and a selection means receiving an address, for selecting one memory cell corresponding to the address to be accessed, from the plurality of memory cells, and outputting information of the selected memory cell to the idle state controller.

Furthermore, when an output of the memory means is active, the idle state controller outputs, after a delay of at least one state period, a signal for controlling a transition of the states in the bus cycle, with the result that an idle state is inserted into the bus cycle.

With the above mentioned arrangement, there is provided the memory means for storing information concerning whether or not the idle state is to be inserted, and the idle state can be inserted into a bus cycle on the basis of the information of the memory means. Therefore, even if the address/data bus of the CPU is coupled directly to a data input/output of a peripheral device, a collision between the data and the address can be prevented, and the access time can be shortened. In addition, the number of circuit elements assembled on a package board can be reduced.

Furthermore, since there are provided the memory means for storing a plurality of items of information concerning whether or not the idle state is to be inserted, and the selection means for selecting and outputting an item of information corresponding to an address region to be accessed, from the plurality of items of information stored in the memory means concerning whether or not the idle state is to be inserted, it is possible to selectively insert the idle state dependently upon the address region to be accessed.

The above and other objects, features and advantages of the present invention will be apparent from the following description of preferred embodiments of the invention with reference to the accompanying drawings.

Brief Description of the Drawings

Figure 1 is a block diagram illustrating a typical example of the conventional data processing system having an address/data bus shared between an address transfer and a data transfer;
Figure 2 is a timing chart illustrating a reading operation of the conventional data processing system shown in Figure 1;
Figure 3 is a timing chart illustrating a writing operation of the conventional data processing system shown in Figure 1;
Figure 4 is a block diagram illustrating a first embodiment of the data processing system in accordance with the present invention having an address/data bus shared between an address transfer and a data transfer;
Figure 5 is a block diagram of the idle state controller included in the data processing system shown in Figure 4;

Figure 6 is a timing chart illustrating a reading operation of the data processing system shown in Figure 4;
Figure 7 is a timing chart illustrating a writing operation of the data processing system shown in Figure 4;
Figure 8 is a block diagram illustrating a second embodiment of the data processing system in accordance with the present invention; and
Figure 9 illustrates a physical address map in the data processing system shown in Figure 8.

Description of the Preferred embodiments

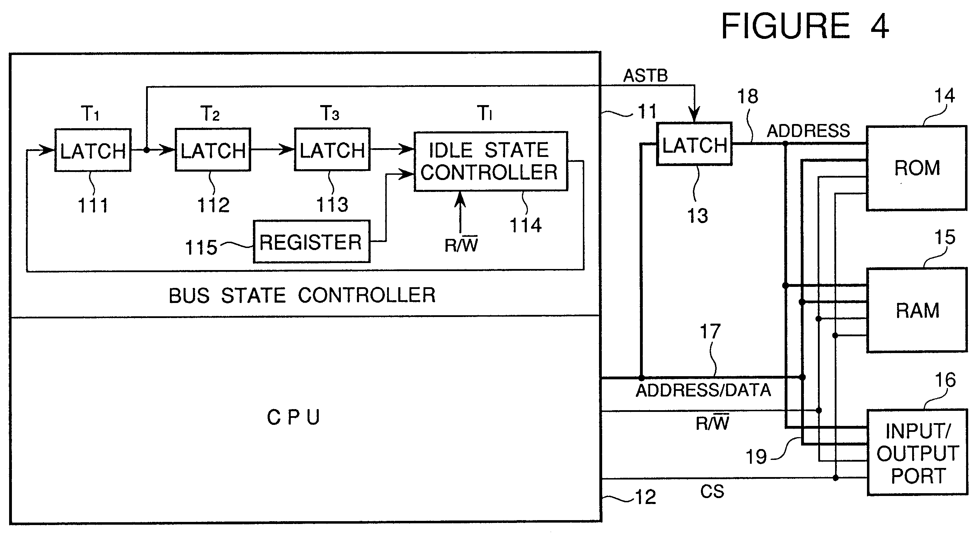

Referring to Figure 4, there is shown a block diagram illustrating a first embodiment of the data processing system in accordance with the present invention having an address/data bus shared between an address transfer and a data transfer. In Figure 4, elements similar or corresponding to those shown in Figure 1 are given the same Reference Numerals, and explanation thereof will be omitted for simplification of description.

As seen from comparison between Figures 1 and 4, the embodiment shown in Figure 4 is different from the conventional example shown in Figure 1 in that it comprises a bus state controller 11 in place of the bus state controller 41 of the conventional data processor shown in Figure 1, and the controller 42 of the conventional data processor shown in Figure 1 is removed.

As shown in Figure 4, the bus state controller 11 comprises first, second and third latches 111, 112 and 113 operated in synchronism with a clock CLOCK internally generated in the CPU 12, an idle state controller 114 and a one-bit register 115. As shown in Figure 4, an output of the first latch 111 is connected to an input of the second latch 112, and an output of the second latch 112 is connected to an input of the third latch 113. An output of the third latch 113 is connected to an input of the idle state controller 114, and an output of the idle state controller 114 is fed back to an input of the first latch 111. The idle state controller 114 also receives, as a control signal, an output signal of the register 115 and the read/write signal R/$\overline{\text{W}}$.

In the bus state controller 11, the output of any one of the three latches 111, 112 and 113 is at "1", or alternatively, the output of the idle state controller 114 is at "1". A period in which the output of the latch 111 is at "1", corresponds to the $T_1$ state, and a period in which the output of the latch 112 is at "1", corresponds to the $T_2$ state. A period in which the output of the latch 113 is at "1", corresponds to the $T_3$ state. A period in which the output of all the three latches 111, 112 and 113 are at "0", corresponds to the TI state (namely, the idle state).

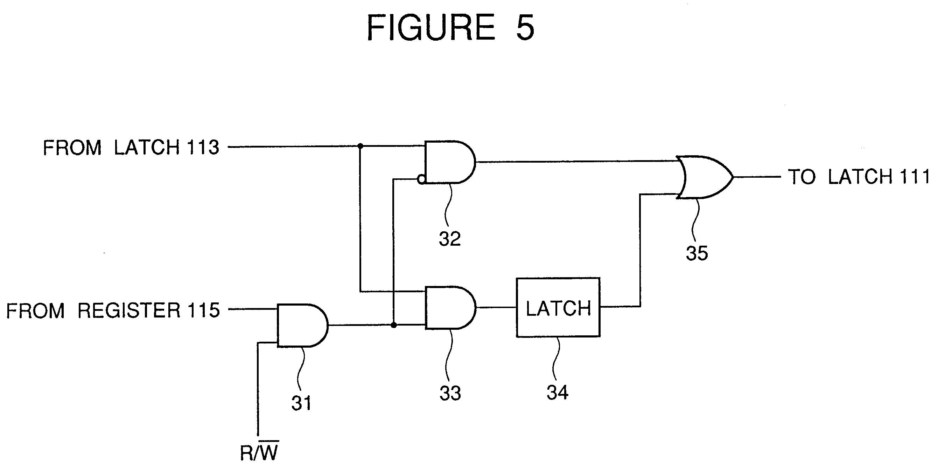

Referring to Figure 5, there is shown a block diagram of the idle state controller 114.

As seen from Figure 5, the idle state controller 114 includes AND gates 31, 32 and 33, a latch 34 and an OR gate 35, which are connected as shown in the drawing. Namely, the AND gate 31 is connected to receive the output of the register 115 and the read/write signal R/$\overline{W}$. The AND gate 33 receives an output of the AND gate 31 and the output of the third latch 113. The AND gate 32 receives an inverted signal of the output of the AND gate 31 and the output of the third latch 113. An output of the AND gate 33 is connected to the latch 34, whose output is connected to one input of the OR gate 35. The other input of the OR gate 35 is connected to an output of the AND gate 32, and an output of the OR gate 35 is connected to the first latch 111.

With this circuit construction, when either the output of the register 115 or the read/write signal R/$\overline{W}$ is at "0", the output of the AND gates 31 and 33 are brought to "0", and on the other hand, the AND gate 32 is opened. Therefore, the output of the third latch 113 is supplied through the AND gate 32 and the OR gate 35 to the first latch 111 as it is.

When both of the output of the register 115 and the read/write signal R/$\overline{W}$ are at "1", the output of the AND gate 31 is brought to "1", and the output of the AND gate 32 is brought to "0". Therefore, the output of the third latch 113 is supplied through the AND gate 33 to the latch 34, and latched in the latch 34 in response to a next clock CLOCK so that the same data as the output of the third latch 113 is then outputted from the latch 34 through the OR gate 35 to the first latch 111.

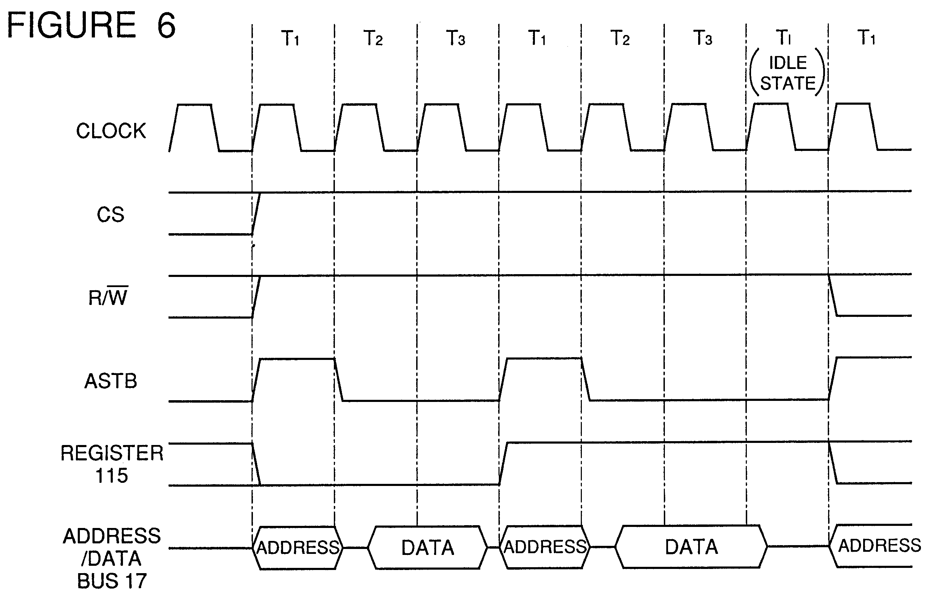

Now, operation for reading data from the ROM 14, the RAM 15 and the input/output port 16 will be described with reference to Figure 6, which is a timing chart illustrating a reading operation of the data processing system shown in Figure 4.

When data is read, both the chip select signal CS and the read/write signal R/$\overline{W}$ are brought to "1".

In the $T_1$ state, the address signal outputted from the CPU 12 to the address/data bus 17, is latched in the latch 13 in response to the address strobe signal ASTB, and then, is supplied to the ROM 14, the RAM 15 and the input/output port 16.

In the $T_2$ state, an internal address output part (not shown) of the CPU 12 is put in a high impedance condition, and therefore, data outputted from one designated by the address signal, of the ROM 14, the RAM 15 and the input/output port 16, is supplied to the CPU 12.

When the value of the register 115 is at "0", the state becomes the $T_1$ state immediately after the $T_3$ state.

On the other hand, when the value of the register 115 is at "1", the TI state (idle state) is inserted after the $T_3$ state and before the $T_1$ state of a next bus cycle, as shown in Figure 6, by the function of the idle state controller 114 mentioned above.

As shown in Figure 6, the output of the register 115 is maintained at "0" in a period from the $T_1$ state to the $T_3$ state of a firs bus cycle, but is brought to "1" in the $T_1$ state of a next or second bus cycle. This is because a predetermined microinstruction for setting "1" into the register 115 has been executed before an instruction to be executed in the next bus cycle is executed.

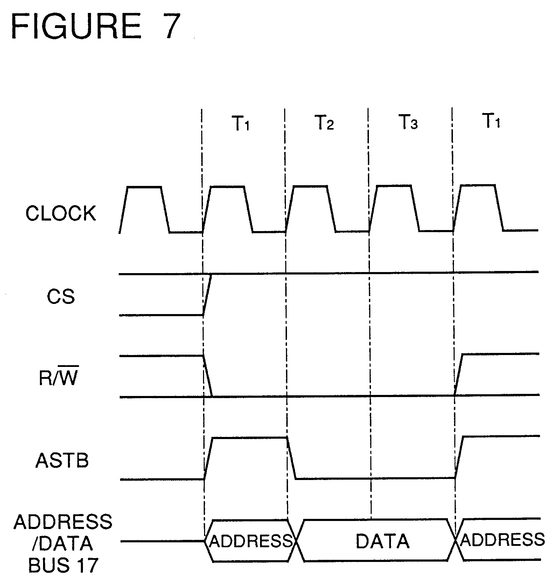

Next, operation for writing data to the RAM 15 and the input/output port 16 will be described with reference to Figure 7, which is a timing chart illustrating a writing operation of the data processing system shown in Figure 4.

When data is written, the chip select signal CS is brought to "1" and the read/write signal R/$\overline{W}$ is brought to "0".

In the $T_1$ state, the address signal outputted from the CPU 12 to the address/data bus 17, is latched in the latch 13 in response to the address strobe signal ASTB, and then, is supplied to the RAM 15 and the input/output port 16.

In the $T_2$ state and the $T_3$ state, data outputted from the CPU 12 is supplied through the address/data bus 17 and the data bus 19 to the RAM 15 and the input/output port 16.

At the writing time, since the read/write signal R/$\overline{W}$ is at "0", the output of the AND gate 31 shown in Figure 5 becomes "0" regardless of the value of the register 115, and therefore, the TI state is never inserted.

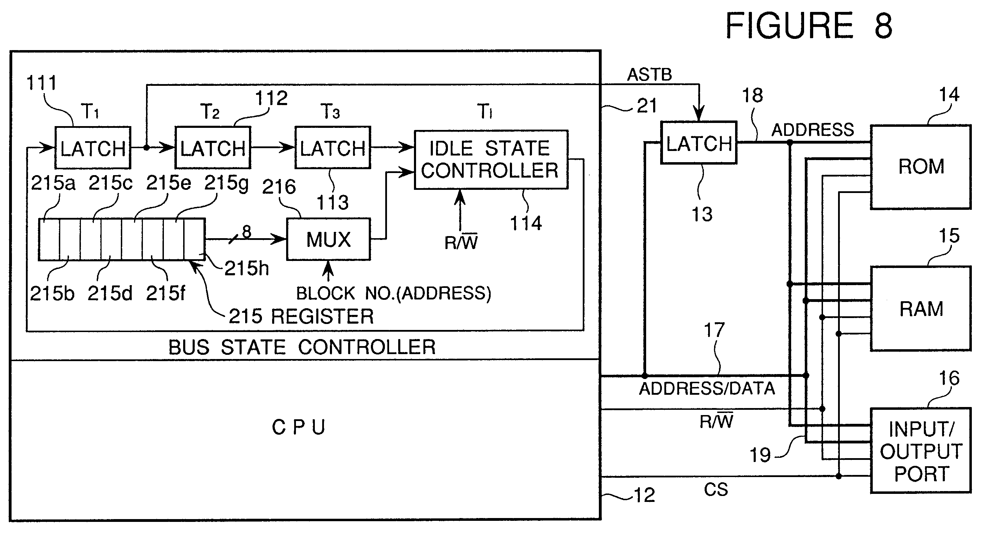

Referring to Figure 8, there is shown a block diagram illustrating a second embodiment of the data processing system in accordance with the present invention. In Figure 8, elements similar or corresponding to those shown in Figure 4 are given the same Reference Numerals, and explanation thereof will be omitted.

As seen from comparison between Figures 4 and 8, the second embodiment is different from the first embodiment in that a bus state controller 21 includes a 8-bit register 215 in place of the one-bit register 115 of the bus state controller 11, and additionally includes a multiplexor 216 connected between the 8-bit register 215 and the idle state controller 114 and controlled by a block number signal.

Namely, the bus state controller 21 includes the first, second and third latches 111, 112 and 113, the idle state controller 114, the 8-bit register 215 and the multiplexor 216.

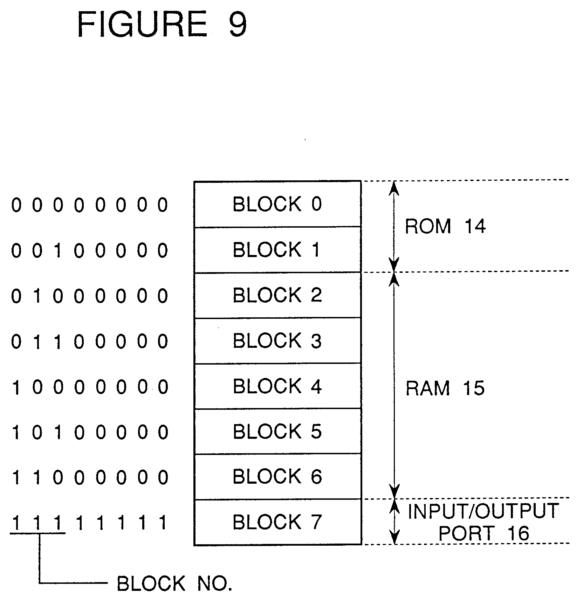

In the shown second embodiment, as shown in Figure 9, a physical address space is divided into eight blocks, and the address is assigned to the ROM 14, the RAM 15 and the input/output port 16 in units of block. More specifically, the three most significant bits of the address (of for example 8 bits) designate the block number, and the remaining five bits of the address indicate an offset address in each block. In the shown example, the block Nos 0 and 1 of the physical address space are assigned to the ROM 14, and the block Nos 2 to 6 of the physical address space are assigned to the RAM 15. The block No 7 of the physical address space is assigned to the input/output port 16.

On the other hand, the 8-bit register 215 is used for setting or designating a block for which the idle state is to be inserted. The least significant bit 215h to the most significant bit 215a of the 8-bit register 215 correspond to the block Nos. 0 to 7, respectively, in the named order. When "1" is set in a certain bit of the 8-bit register 215, the idle state is inserted at accessing to a corresponding block. If "0" is set in another certain bit of the 8-bit register 215, the idle state is not inserted at accessing to another corresponding block.

The multiplexor 216 is composed of a 8-input 1-output multiplexor, which is controlled by the three most significant bits of the address supplied from the CPU 12, so as to select and output one bit of the register 215 designated by the three most significant bits of the address.

For example, if the 8-bit register 215 is set with "01000011" (which indicates that the idle state is to be inserted for the block Nos. 0, 1 and 6), when the three most significant bits of the address are "0", "1" or "6", namely when the ROM 14 ("00000000" ~ "00111111") or the block 6 of the RAM 15 ("11000000" ~ "11011111") are read, "1" is outputted to the idle state controller 114 so that the idle state is inserted after the $T_3$ state.

As seen from the above, the second embodiment is configured to store information concerning whether or not the idle state is to be inserted, for each unitary address region (for example, block), and to supply the information concerning whether or not the idle state is to be inserted, through the multiplexor on the basis of the given address information (for example, block number). Therefore, it is possible to selectively insert the idle state dependently upon the address region to be accessed. Accordingly, the second embodiment can selectively insert the idle state, for example, when a low speed memory is accessed. Thus, the controller 42 required in the conventional example is not required. In particular, an interface between the data processing system and a memory system including a high speed memory and a low speed memory can be made simple.

The invention has thus been shown and described with reference to the specific embodiments. However, it should be noted that the present invention is in no way limited to the details of the illustrated structures but changes and modifications may be made within the scope of the appended claims.

In the above mentioned embodiments, a memory means for storing the information concerning whether or not the idle state is to be inserted, is constituted of the register which can be set by execution of a predetermined instruction by the data processing system. However, this memory means is not limited to the register, but can be constituted by any other means, for example, a switch which can store "1" or "0".

As seen from the above, the data processing system in accordance with the present invention is provided the memory means for storing information concerning whether or not the idle state is to be inserted, and is so configured to be capable of inserting the idle state into a bus cycle on the basis of the information of the memory means. Therefore, even if the address/data bus of the CPU is coupled directly to a data input/output of a peripheral device, a collision between the data and the address can be prevented. Therefore, the access time can be shortened, and the number of circuit elements assembled on a package board can be reduced.

Preferably, the data processing system in accordance with the present invention includes the memory means for storing a plurality of items of information concerning whether or not the idle state is to be inserted, and the selection means for selectively outputting one of the plurality of items of information concerning whether or not the idle state is to be inserted, dependently upon an address region to be accessed. With this arrangement, it is possible to selectively insert the idle state dependently upon the address region to be accessed.

Accordingly, the data processing system in accordance with the present invention can use a low speed memory, without using the controller which was required in the conventional example for preventing a collision between the data and the address. Therefore, an interface between the data processing system and a memory system including a high speed memory and a low speed memory can be remarkably simplified.

**Claims**

1. A data processing system having a bus shared between an address transfer and a data transfer, comprising:

a control means for controlling insertion of an idle state into a bus cycle; and

a memory means for storing information concerning whether or not the idle state is to be inserted,

the control means operating to insert the idle state into a bus cycle on the basis of the information of said memory means.

2. A data processing system having a bus shared between an address transfer and a data transfer, comprising:

a control means for controlling insertion of an idle state into a bus cycle;

a memory means for storing information concerning whether or not the idle state is to be inserted; and

a selection means for selecting and outputting information for an address region to be accessed, from the information of said memory means concerning whether or not the idle state is to be inserted,

the control means operating to insert the idle state into a bus cycle on the basis of the selected address region information.

3. A data processing system having a bus shared between an address transfer and a data transfer, and so configured that a bus cycle is composed of a plurality of states, the system comprising:

a bus state control means for controlling respective states of each bus cycle, said bus state control means including

a latch means for holding a signal for controlling the transition of the states in the bus cycle,

an idle state controller for controlling insertion of an idle state into a bus cycle, and

a memory means for storing information concerning whether or not the idle state is to be inserted; and

the control means operating to insert the idle state into a bus cycle on the basis of the information stored in said memory means.

4. A data processing system claimed in Claim 3 wherein said memory means includes a plurality of memory cells each storing information concerning whether or not the idle state is to be inserted, and a selection means receiving an address for selecting one memory cell corresponding to the address to be accessed, from said plurality of memory cells, and outputting information of the selected memory cell to said idle state controller.

5. A data processing system claimed in Claim 4 wherein when an output of said memory means is active, said idle state controller outputs, after a delay of at least one state period, a signal for controlling a transition of the states in the bus cycle, with the result that an idle state is inserted into the bus cycle.

6. A data processing system claimed in Claim 5 wherein said bus state controller includes a plurality of latches which are cascaded to each other and which hold a signal for controlling a predetermined number of states in the bus cycle, and

wherein said idle state controller has its input connected to an output of one latch of said plurality of latches and its output connected to an input of another latch of said plurality of latches, and when said output of said memory means is active, said idle state controller outputs said output of said one latch to said input of said another latch after said delay of said at least one state period, and when said output of said memory means is inactive, said idle state controller outputs said output of said one latch to said input of said another latch with no delay.

7. A data processing system claimed in Claim 3 wherein when an output of said memory means is active, said idle state controller outputs, after a delay of at least one state period, a signal for controlling a transition of the states in the bus cycle, with the result that an idle state is inserted into the bus cycle.

8. A data processing system claimed in Claim 7 wherein said bus state controller includes a plurality of latches which are cascaded to each other and which hold a signal for controlling a predetermined number of states in the bus cycle, and

wherein said idle state controller has its input connected to an output of one latch of said plurality of latches and its output connected to an input of another latch of said plurality of latches, and when said output of said memory means is active, said idle state controller outputs said output of said one latch to said input of said another latch after said delay of said at least one state period, and when said output of said memory means is inactive, said idle state controller outputs said output of said one latch to said input of said another latch with no delay.

# FIGURE 1 PRIOR ART

EP 0 687 984 A1

# FIGURE 2 PRIOR ART

# FIGURE 3 PRIOR ART

# FIGURE 4

EP 0 687 984 A1

# FIGURE 5

FROM LATCH 113 ——

TO LATCH 111

32

35

FROM REGISTER 115 ——

LATCH

31

33

34

R/$\overline{W}$

EP 0 687 984 A1

# FIGURE 6

EP 0 687 984 A1

# FIGURE 7

FIGURE 8

ROM 14

RAM 15

INPUT/OUTPUT PORT 16

ADDRESS

ADDRESS 18

LATCH 13

ASTB 21

ADDRESS/DATA 17

R/W 19

CS 12

BUS STATE CONTROLLER

$T_i$

IDLE STATE CONTROLLER 114

R/W

$T_3$ LATCH 113

$T_2$ LATCH 112

$T_1$ LATCH 111

MUX 216

BLOCK NO.(ADDRESS)

215 REGISTER

8 215h

215a 215c 215e 215g

215b 215d 215f

C P U

15

# FIGURE 9

```
0 0 0 0 0 0 0 0    BLOCK 0      ⎤ ROM 14
0 0 1 0 0 0 0 0    BLOCK 1      ⎦
0 1 0 0 0 0 0 0    BLOCK 2      ⎤
0 1 1 0 0 0 0 0    BLOCK 3      ⎥
1 0 0 0 0 0 0 0    BLOCK 4      ⎥ RAM 15
1 0 1 0 0 0 0 0    BLOCK 5      ⎥
1 1 0 0 0 0 0 0    BLOCK 6      ⎦
1 1 1 1 1 1 1 1    BLOCK 7      ⎤ INPUT/OUTPUT
                                  PORT 16
```

BLOCK NO.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | IBM TECHNICAL DISCLOSURE BULLETIN, vol. 26, no. 11, April 1984 NEW YORK, US, pages 5788-5789, 'Wait/Hold State Generator for a Processor' * the whole document * | 1-8 | G06F13/42 |
| Y | US-A-5 155 812 (EHLIG ET AL) * abstract * * column 41, line 41 - column 44, line 3 * * claims 1-8 * | 1-8 | |
| A | WO-A-89 02128 (MOTOROLA INCORPORATED) * abstract * * page 5, line 1 - page 8, line 13 * * claims 1-3; figure 2 * | 1-8 | |
| A | IBM TECHNICAL DISCLOSURE BULLETIN, vol. 27, no. 3, August 1984 NEW YORK, US, pages 1695-1696, 'Wait-State Generator' * the whole document * | 1-8 | |

TECHNICAL FIELDS SEARCHED (Int.Cl.6)

G06F

The present search report has been drawn up for all claims

| Place of search | Date of completion of the search | Examiner |
|---|---|---|
| THE HAGUE | 5 October 1995 | McDonagh, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)